# EUROPEAN PATENT APPLICATION

(11) **EP 4 414 220 A1**
(43) Date of publication of application: **14.08.2024**
(21) Application number: 24156532.4
(22) Date of filing: 08.02.2024
(51) Int. Cl.: B60R 13/10

(54) **LICENCE PLATE HOLDER DEVICE**

(30) Priority: 08.02.2023 IT 202300002094; 08.02.2023 IT 202300002100; 19.10.2023 IT 202300021789
(71) Applicant: Gentili, Riccardo, 00040 Ariccia (RM) (IT)
(72) Inventor: Gentili, Riccardo, 00040 Ariccia (RM) (IT)
(74) Representative: Mulas, Chiara

(57) **Abstract**

The present invention concerns a license plate holder device (1) including a main body (2) adapted to be anchored to a vehicle and to support a license plate, said main body (2) having a first main development direction parallel to a first axis (x), said main body (2) providing at least one opening (3), said at least one opening (3) having two mating edges (7) opposite each other and parallel to said first axis (x), said license plate holder device (1) further including a coupling mechanism (4) for coupling said license plate holder device (1) to said vehicle, said coupling mechanism (4) being adapted to be housed in said at least one opening (3) and having at least one plate (6) adapted to rest on said two mating edges (7) of said at least one opening (3), said at least one plate (6) providing at least one slit (9) extending longitudinally, whose longitudinal axis (y) is perpendicular to said first axis (x), defining a first plane (xy), at least one first member (10) provided with a slot (13), and fixing means (5) to couple said license plate holder device to said vehicle through said first member (10), said license plate holder device (1) being characterized in that said plate (6) is slidably coupled along said first axis (x) to said two mating edges (7) of said at least one opening (3) and in that said at least one first member (10) is slidably coupled along said longitudinal axis (y) to said at least one slit (9).

## Description

The present invention concerns a license plate holder device for vehicles, in particular for cars, adapted to the application of an identification license plate by the vehicle manufacturer itself, easily and directly at the time of installation of the device.

More precisely, the present invention concerns a license plate holder device, preferably made of plastic material, adapted to fix a license plate of a vehicle, in particular a motor vehicle, thereon.

In the state of the art, license plate holder devices are known which consist of a main body, typically made of plastic material, usually with a profile that resembles that of the license plate for which it is designed, with a rectangular shape having a surface for fixing the vehicle license plate, adapted to couple with the vehicle bodywork, and an external surface, opposite to the fixing surface, on which the license plate is rigidly coupled using locking elements, such as for example screws and bolts.

Furthermore, these devices are designed to be applied directly by the vehicle manufacturing company onto the vehicle itself, without requiring the action of a specialized operator or laborious installation processes, with the aim of not being removed once installed, thus allowing the application of advertising/commercial information regarding the manufacturer of the vehicle on which the device is installed.

In the license plate holder devices known in the state of the art, in said main body there are openings or slots, adapted for the insertion of fixing elements which can be placed in correspondence with at least two of said slots, allowing the main body and therefore the entire device to be fixed on the vehicle bodywork.

This mode of anchoring the device presents some issues when fixing it to the bodywork, since once fixed, for example through the positioning of screws, the device (during normal use of the vehicle) may experience vibrations, which, combined with the fact that the profile of the license plate holder device does not correctly match the vehicle bodywork, following its profile, lead to unwanted movements of the license plate holder device itself.

This anchoring system is also limiting in the positioning of the license plate holder device on the vehicle, as the positions available for positioning are limited to the arrangement of said slots, requiring in certain cases a specific license plate holder device for a specific vehicle. This issue has been addressed in the state of the art by increasing the number of slots, and therefore the anchoring points available, on the main body of the device or by installing horizontal slots at various heights of the main body (solution described in the patent document EP 3 279 038 B1), thus allowing the license plate holder device to be anchored with a greater flexibility. This solution, however, although allowing a virtually infinitesimal variation in positioning along the horizontal direction, does not allow the same flexibility along the vertical direction, thus limiting the installation positions of the license plate holder device to the arrangement of the horizontal slots along the vertical direction.

The aim of the present invention is to overcome the issues highlighted in the prior art, in particular to allow a greater flexibility and number of installation positions of a license plate holder device on a motor vehicle bodywork.

Another aim of the invention is to provide a license plate holder device, economical and easy to install, which eliminates the presence of excessive vibrations during use of the vehicle on which it is installed and which cannot be removed once installed on said vehicle.

It is an object of the present invention a license plate holder device including a main body adapted to be anchored to a vehicle and to support a license plate, said main body having a first main development direction parallel to a first axis, said main body providing at least one opening, said at least one opening having two mating edges opposite each other and parallel to said first axis, said license plate holder device further including a coupling mechanism for coupling said license plate holder device to said vehicle, said coupling mechanism being adapted to be housed in said at least one opening and having at least one plate adapted to rest on said two mating edges of said at least one opening, said at least one plate providing at least one slit extending longitudinally, whose longitudinal axis is perpendicular to said first axis, defining a first plane, at least one first member provided with a slot, and fixing means to couple said license plate holder device to said vehicle by means of said first member, said license plate holder device being characterized in that said plate is slidably coupled along said first axis to said two mating edges of said at least one opening and in that said at least one first member is slidably coupled along said longitudinal axis to said at least one slit.

In particular, according to the invention, said plate can have at least one tab, in correspondence with each of its longitudinal ends along said longitudinal axis, adapted to slidably couple to a respective mating edge of the respective opening of said main body.

Again according to the invention, each mating edge can provide a coupling rail extending parallel to said first axis, wherein in correspondence with each longitudinal end said plate can comprise a first tab and at least one second tab, said two tabs being spaced along a transverse axis perpendicular to said first plane to form an indentation, and wherein each coupling rail can be inserted into the respective indentation between the two tabs which slidably couple thereto.

Still according to the said invention at least one second tab can be arranged offset from said first tab, along an axis parallel to said first axis.

Again according to the invention, said coupling rail of each mating edge can have a substantially "S"-shaped longitudinal section on whose concavities said first one and said at least one second tab can respectively abut.

Still according to the invention, said first tab of each longitudinal end of said plate can have a protrusion having a substantially "L"-shaped longitudinal section with the short arm facing towards the respective indentation, being able to abut the respective concavity of said substantially "S"-shaped section of said coupling rail.

Again according to the invention, said plate in correspondence with each of its longitudinal ends can have two second tabs and said first tab can be arranged between said two second tabs.

Still according to the invention, said portion of each mating edge may not have said coupling rail, therefore forming a slit to allow the tabs of said plate to be positioned in said at least one opening.

Again according to the invention said at least one slit of said plate can have two side rails placed inside said at least one slit along an axis parallel to said longitudinal axis, and said first member can have two anchoring arms, projecting along said transverse axis, adapted to slidably couple to the two side rails of the respective slit of said plate.

Still according to the invention, each of said anchoring arms of said first member can have a substantially "L"-shaped cross section for anchoring to the respective side rail of said slit.

Furthermore, it is an object of the present invention a license plate holder device including a main body adapted to be anchored to a vehicle and to support a license plate, said main body having a first main development direction parallel to a first axis, wherein said main body provides a plurality of through holes, wherein said license plate holder device includes a plurality of anti-vibrating devices, each anti-vibrating device being arranged in the respective through hole in correspondence with one face of said main body to reduce vibrations between said license plate holder device and said license plate, wherein each anti-vibrating device includes a button and two connecting joints, each with one end connected to the edge of the respective through hole of said main body, and with the other end connected to said button.

Again according to the invention, the button can protrude from one face of said main body.

Furthermore, it is an object of the present invention a license plate holder device including a main body adapted to be anchored to a vehicle and to support a license plate, said main body having a first main development direction parallel to a first axis, wherein said main body provides a plurality of through holes, wherein said license plate holder device includes a plurality of anti-vibrating or anti-vibration devices, each anti-vibrating device being arranged in the respective through hole in correspondence with one face of said main body to reduce vibrations between said license plate holder device and said vehicle, wherein said anti-vibration device has a rigid body, adapted to be coupled to the respective through hole of said main body, and an elastic arm in the form of an arc of a circle rigidly joined to said rigid body at one end thereof and having its concavity facing towards one face of said main body.

Still according to the invention, said through hole on said main body can have a quadrangular shape and said rigid body of said anti-vibration device can have a cubic volume conforming to said through hole.

Again according to the invention, said rigid body of said anti-vibration device can provide two anchoring tabs to allow said anti-vibration device to be rigidly anchored to two opposite sides of said quadrangular hole of said main body.

Still according to the invention, said anti-vibration device can consist of two arms equal to each other rigidly joined to said rigid body at their common end, in particular so as to join the rigid portion of the anti-vibrating device with a central portion of said elastic portion.

Furthermore, according to the invention, said elastic portion of said anti-vibration device can be shaped in the form of an arc of a circle.

Finally according to the invention, said arms can be joined to said rigid portion of said anti-vibration device by means of a spacer.

Furthermore, it is an object of the present invention a license plate holder device including a main body adapted to be anchored to a vehicle and to support a license plate, said main body having a first main development direction parallel to a first axis characterized in that it includes a rod comprising fastening means for fastening to said main body, wherein said fastening means are at least one snap lock.

Still according to the invention, said snap lock can provide a pair of hooks arranged on said rod and a cavity obtained in the side face of said main body, into which said pair of hooks are adapted to be inserted.

Again according to the invention, said rod can comprise at least two, preferably three, snap locks.

Finally, according to the invention, said license plate holder device can include a plurality of locking devices, adapted to couple by interlocking with said main body to rigidly constrain said license plate with said license plate holder device.

The invention will now be described by way of illustration but not limitation, with particular reference to the drawings of the attached figures, in which:
Figure 1a shows a front perspective view of the license plate holder device according to the invention;
Figure 1b shows a rear perspective view of the license plate holder device of Figure 1a;
Figure 1c shows a front view of the main body of the license plate holder device of Figure 1a;
Figure 1d shows a rear view of the main body of the license plate holder device of Figure 1a;
Figure 2a shows a sectional view along the section plane IIa of the main body of the license plate holder device of Figure 1c;
Figure 2b shows a sectional view along the section plane IIa of the main body of the license plate holder device of Figure 1c;
Figure 2c shows a side view of the main body of the license plate holder device of Figure 1a;
Figure 3a shows a perspective view of the sliding plate of the license plate holder device of Figure 1a;
Figure 3b shows a front view of the plate of Figure 3a;
Figure 3c shows a rear view of the plate of Figure 3a;
Figure 3d shows a sectional view along the section plane IIId of the plate of Figure 3b;
Figure 3e shows a side view of the plate of Figure 3a;
Figure 3f shows a sectional view along the section plane IIIf of the plate of Figure 3b;
Figure 3g shows a top view of the plate of Figure 3a;
Figure 4a shows a perspective view of the sliding member of the license plate holder device of Figure 1a;
Figure 4b shows a bottom view of the member of Figure 4a;
Figure 4c shows a front view of the member of Figure 4a;
Figure 4d shows a side view of the member of Figure 4a;
Figure 4e shows a rear view of the member of Figure 4a;
Figure 5 shows a sectional view along the section plane V of the license plate holder device of Figure 1a;
Figure 6 shows a sectional view along the section plane VI of the license plate holder device of Figure 1a;
Figure 7a shows a front view of the rod of the license plate holder device of Figure 1a;
Figure 7b shows a perspective view of the rod of Figure 7a;
Figure 7c shows a rear view of the rod of Figure 7a;
Figure 8a shows a perspective view of the locking device of the license plate holder device of Figure 1a;
Figure 8b shows a bottom view of the locking device of Figure 8a;
Figure 8c shows a first side view of the locking device of Figure 8a;
Figure 8d shows a front view of the locking device of Figure 8a;
Figure 8e shows a second side view of the locking device of Figure 8a;
Figure 8f shows a rear view of the locking device of Figure 8a;
Figure 9a shows a perspective view of a first anti-vibration device of the license plate holder device of Figure 1a, to reduce vibrations with the vehicle on which it is arranged, in a first embodiment;
Figure 9b shows a bottom view of the anti-vibration device of Figure 9a;
Figure 9c shows a side view of the anti-vibration device of Figure 9a;
Figure 9d shows a top view of the anti-vibration device of Figure 9a;
Figure 9e shows a front view of the anti-vibration device of Figure 9a;
Figure 9f shows a rear view of the anti-vibration device of Figure 9a;
Figure 10 shows a front perspective view of a second anti-vibration device of the license plate holder device of Figure 1a, to reduce vibrations with the license plate to be supported;
Figure 11 shows a rear perspective view of the anti-vibration device of Figure 10;
Figure 12 shows the detail XII of the main body of the license plate holder device of Figure 1b;
Figure 13 shows a rear perspective view of the locking device inserted into the eccentric hole of the main body of the license plate holder device of Figure 1a;
Figure 14a shows a perspective view of a first anti-vibration device in a second embodiment of the license plate holder device of Figure 1a, to reduce vibrations with the vehicle on which it is arranged;
Figure 14b shows a front view of the anti-vibration device of Figure 14a;
Figure 15 shows a detail of a front perspective view of the license plate holder device according to the invention wherein the anti-vibration device of Fig. 14a is inserted; and
Figure 16 shows a detail of a rear perspective view of the license plate holder device according to the invention wherein the anti-vibration device of Fig. 14a is inserted.

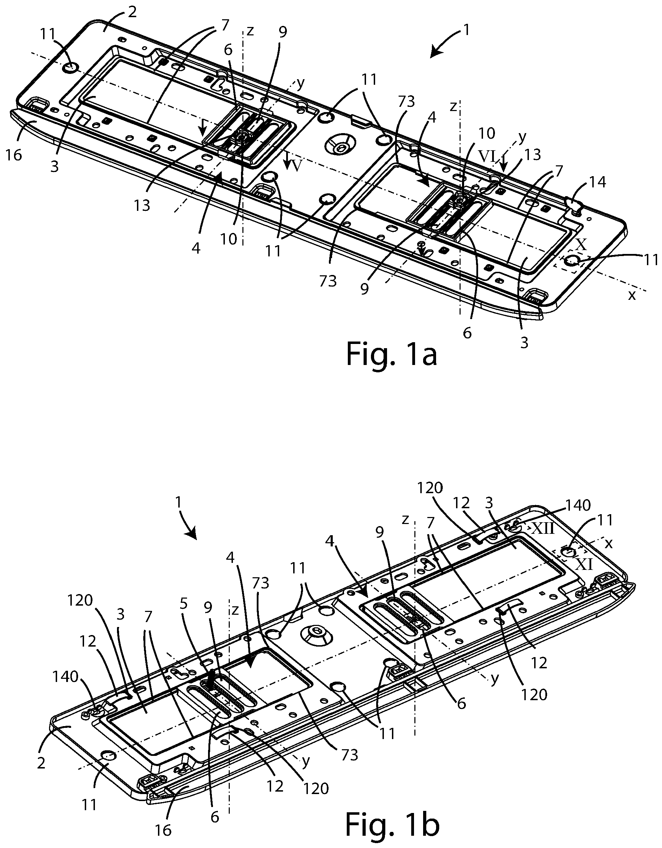

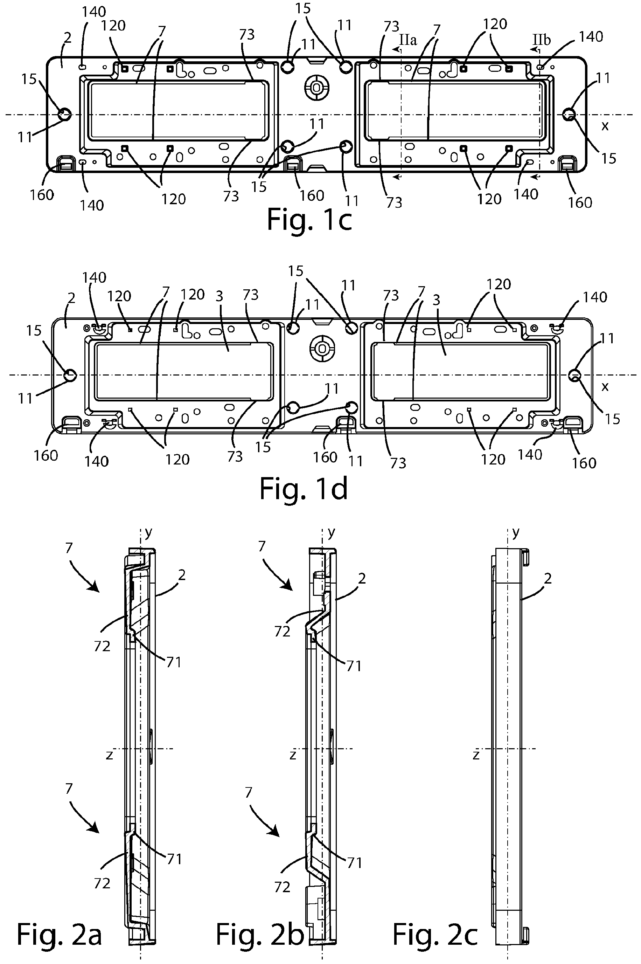

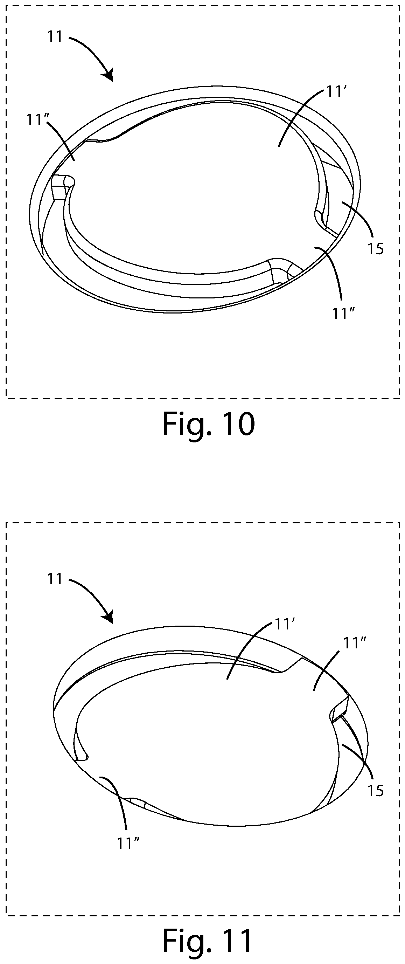

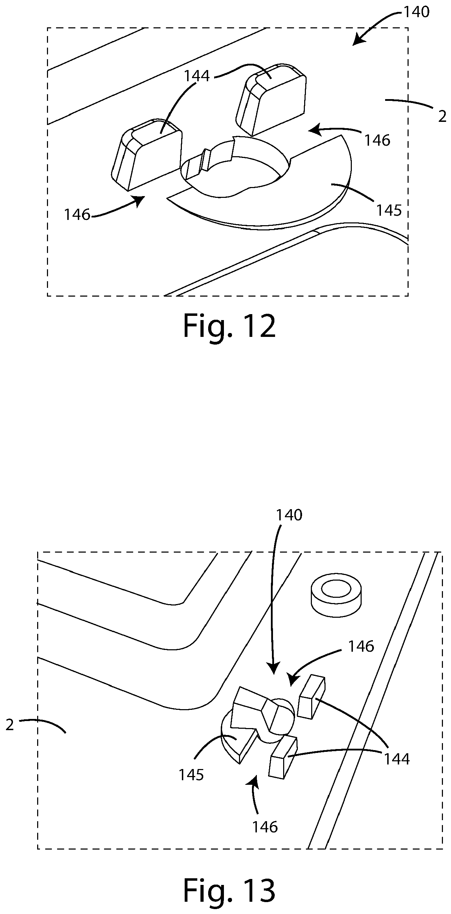

By observing Figures 1 - 16, a license plate holder device according to the invention is shown, indicated by the numerical reference 1.

The license plate holder device 1 according to the invention includes a main body 2 adapted to be anchored to a vehicle and to support a license plate (not shown in the figures). This device 1 can be mounted on the vehicle by the vehicle manufacturer or by the vehicle dealer and can be customized with information from the manufacturer or dealers or other parties. Preferably, this information can be inserted into a rod 16 which can be coupled to one side of said main body 2, in particular at its lower side. This license plate holder device 1 is configured as an assembly of components which may also be separated from each other. Preferably the license plate holder device 1 is made of polymeric material.

The main body 2 has a first main development direction parallel to a first x axis.

In particular, said main body 2 has a substantially rectangular shape with the long side arranged parallel to said first x axis.

Said main body 2 has a first face or front face adapted to house the vehicle license plate and a rear face or second face, opposite to the first face, adapted to couple to the vehicle on which it is mounted.

Furthermore, the main body 2 provides at least one opening 3. In the embodiment shown in the figures (with reference in particular to Figures 1a - 1d) two openings 3 are provided, which have a substantially rectangular shape with the long side arranged parallel to said first x axis.

Preferably, said two openings 3 are arranged symmetrically on the main body 2 of the license plate holder device 1.

Said at least one opening 3 has two mating edges 7 opposite each other and parallel to said first x axis. In particular, these mating edges 7 coincide with the upper and lower edges of the respective opening 3.

Furthermore, the license plate holder device 1 further comprises a coupling mechanism 4 to couple said license plate to said vehicle by means of said main body 2.

This coupling mechanism 4 is in fact adapted to be housed in the respective opening 3 (in the embodiment shown in the figures, two coupling mechanisms 4 are provided, one for each opening 3).

This coupling mechanism 4 provides at least one plate 6 designed to rest on said two mating edges 7 of said at least one opening 3 of the main body 2. In particular, two plates 6 are provided, each for each opening 3.

Said at least one plate or bracket 6 provides at least one slit 9 extending longitudinally, whose longitudinal y axis is perpendicular to said first x axis. Said first x axis and said longitudinal y axis together define a first xy plane, parallel to the plane on which the front and rear faces of the main body 2 lie.

The plate 6 can also provide multiple longitudinal slits 9, for example in the embodiment shown it has three adjacent longitudinal slits 9.

Said coupling mechanism 4 further includes at least one first member 10 provided with slot 13, and fixing means 5, in particular a screw 5 adapted to engage with said preferably threaded slot 13, to couple said license plate holder device to said vehicle by means of said first member 10.

As can be seen from Figures 1a and 1b, the plate 6 of the license plate holder device 1 according to the invention is slidably coupled along said first x axis to said two mating edges 7 of said at least one opening 3 and said at least one first member 10 is slidably coupled along said longitudinal y axis to said at least one slit 9.

Therefore, it is possible to move the plate 6 along said first x axis, by sliding it on the respective mating edges 7, according to the position where the fixing means 5 are to be positioned and successively, or simultaneously or even before, to move the member 10 along the longitudinal y axis along the respective longitudinal slit 9 to correctly position it in correspondence with the fixing point to the vehicle bodywork. This first member 10 or fixing member 10 is therefore a washer that is mobile both on the longitudinal y axis and on the first x axis by sliding the plate 6.

This advantageously allows ample freedom and flexibility in adjusting the position of the coupling member 10 in the respective opening 3 to easily adapt to the arrangement of the holes on the vehicle for fixing the license plate holder to the bodywork of the vehicle. Furthermore, this helps the user to fix the license plate holder without risking that the components could fall during assembly.

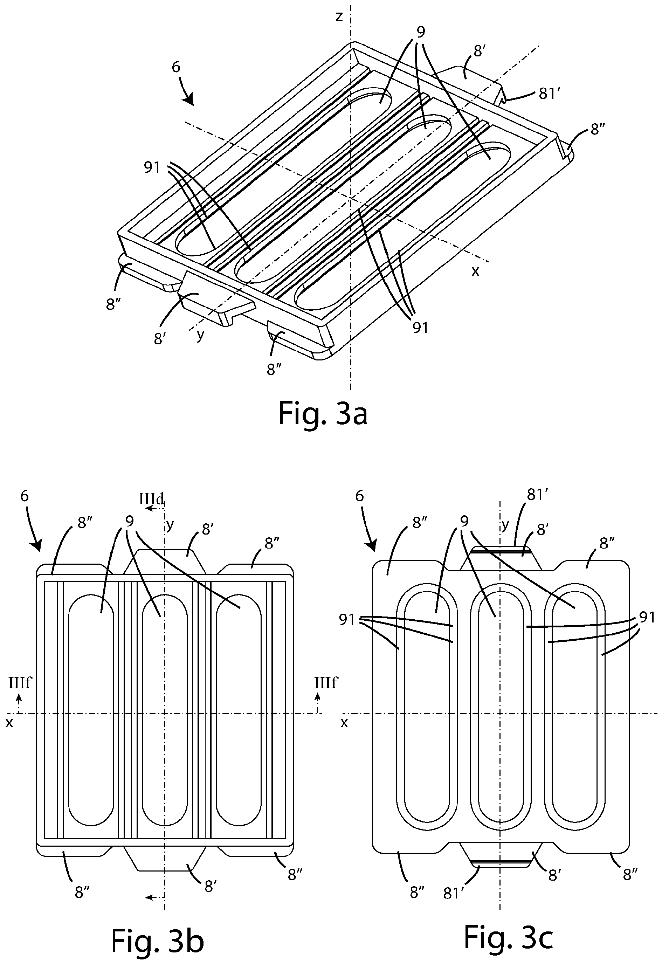

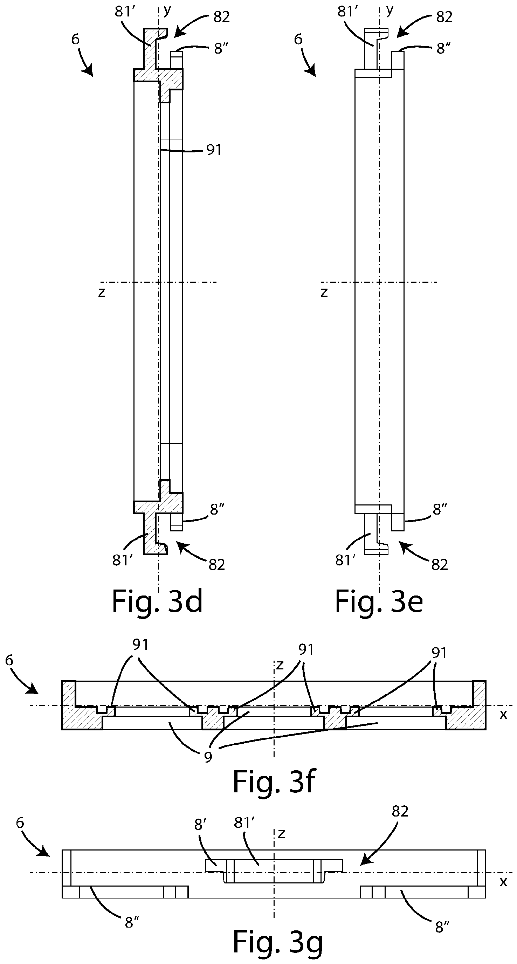

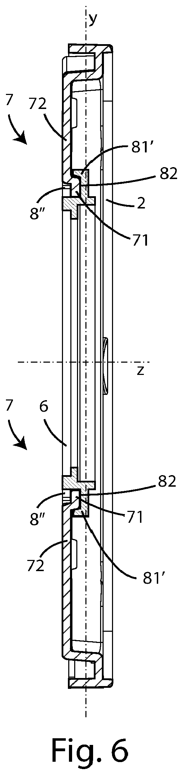

As can be seen from Figures 3a - 3g and 6, the plate 6 can have at least one tab 8', 8", in correspondence with each of its longitudinal ends along said longitudinal y axis, adapted to slidably couple to a respective mating edge 7 of the respective opening 3 of said main body 2. Each at least one tab 8', 8" is adapted to slidably engage with the respective mating edge 7 of the opening 3, thus preventing it from accidentally falling, being firmly coupled thereto but at the same time being free to slide along said first x axis.

Furthermore, as visible in particular in Figure 6, each mating edge 7 can provide a coupling rail 72 extending parallel to said first x axis, wherein at each longitudinal end said plate 6 comprises a first tab 8' and at least one second tab 8", said two tabs 8', 8" being spaced along a transverse z axis perpendicular to said first xy plane, therefore in depth, to form an indentation 82, and wherein each coupling rail 72 is inserted in the respective indentation 82 between the two tabs 8', 8" which are slidably coupled thereto.

This allows the coupling between the two longitudinal ends of the plate 6 and the mating edges 7 of the opening 3 to be stable and at the same time facilitates the sliding of the plate 6 along this first x axis.

In particular, as visible from Figures 3b and 3c, said at least one second tab 8" is arranged offset from said first tab 8', along an axis parallel to said first x axis. In other words, said at least one second tab 8" is spaced from the first tab 8' along said x axis, so as to act as a counteracting force to fasten more easily to the respective coupling rail 72. These at least two tabs 8', 8" of each longitudinal end of the plate 6 are in fact offset both along an axis parallel to the first x axis and in parallel to the transverse z axis.

Preferably in the embodiment shown in the figures, it has three tabs 8', 8" for each longitudinal end. More particularly, said plate 6, at each of its longitudinal ends, has two second tabs 8", and said first tab 8' is arranged between said two second tabs 8", preferably in a central position.

The presence of three tabs further improves the stability of the coupling between the tabs 8', 8" and the coupling rail 72.

Furthermore, as visible from Figure 6, the coupling rail 72 of each mating edge 7 can have a substantially S-shaped longitudinal section on whose opposite concavities said first and said at least one second tab 8', 8" abut respectively. In particular, the two second tabs 8" abut in correspondence with the same concavity of the "S"-shaped section of the respective coupling rail 72, while the first tab 8', placed between the two second tabs 8", abuts on the opposite concavity of the "S"-shaped section of the respective coupling rail 72.

More specifically, said first tab 8' of each longitudinal end of said plate 6 can have a protrusion 81' having a substantially "L"-shaped longitudinal section with the short arm facing towards the respective indentation 82 abutting the respective concavity of said substantially "S"-shaped section of said coupling rail 72.

To facilitate the insertion of the plate 6 into the respective opening 3, preferably the main body 2 of the license plate holder device 1 can have a portion 73 of each mating edge 7 not having said coupling rail 72, therefore forming a slit 73, visible in Figures 1c and 1d. This slit 73 advantageously allows the tags 8', 8" of said plate 6 to be positioned in said at least one opening 3 and allows said tabs 8', 8" to be sliding coupled on said coupling rail 72.

In particular, the absence of the coupling rail 72 forms a slit 73 in the main body 2 whose height dimension is substantially equivalent to the overall dimension in the longitudinal direction of the tabs 8', 8" of each longitudinal end of the plate 6, allowing its insertion and the subsequent insertion of the indentation 82 between the tabs 8', 8" in coupling with the coupling rail 72.

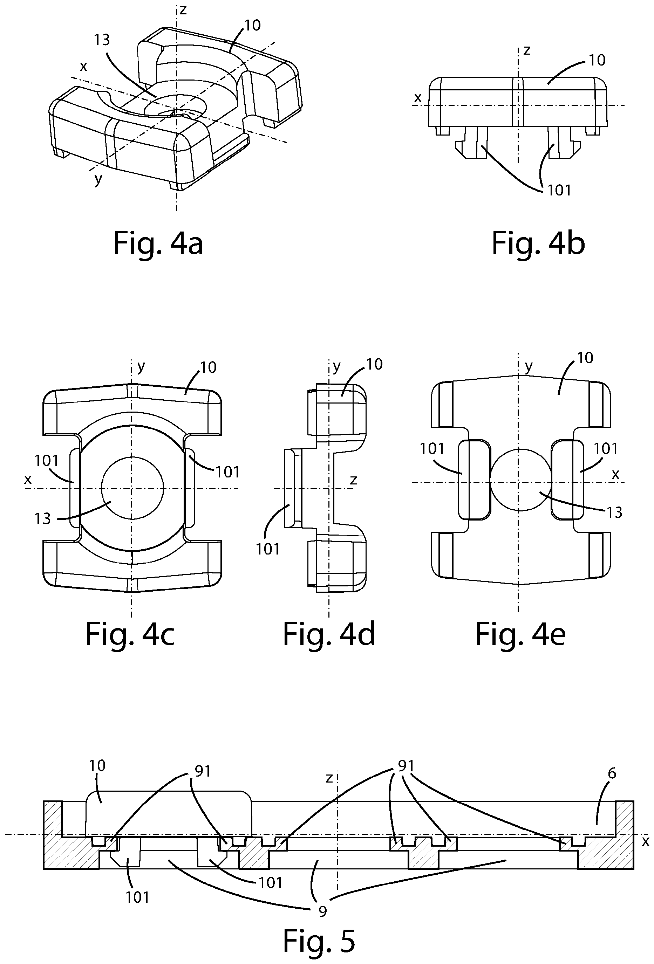

Returning again to the description of plate 6, with particular reference to Figures 3f and 5, it can be observed how each slit 9 of said plate 6 can have two side rails 91 located inside the respective slit 9 along an axis parallel to said longitudinal y axis. Furthermore, by observing Figure 4b, said first member 10 can have two anchoring arms 101, projecting along a transverse z axis, adapted to slidably couple to the two side rails 91 of the respective slit 9 of said plate 6. This advantageously allows the member 10 to be firmly coupled to the respective slit, preventing it from falling during the fixing of the license plate holder 1, but at the same time it does not prevent it from sliding along said longitudinal y axis relative to the respective longitudinal slit 9 of the plate 6.

In particular, as seen in Figure 4b, each of said anchoring arms 101 of said first member 10 can have a substantially "L"-shaped cross section for anchoring to the respective side rail 91 of said slit 9. In other words, these anchoring arms 101 have the short arm facing in a direction opposite to the center of symmetry of the body of the member 10.

In order to reduce vibrations between said license plate holder device 1 and said vehicle or said license plate, the license plate holder device 1 can provide a plurality of anti-vibrating or anti-vibration devices 11 or 12. Furthermore, the main body 2 of the device license plate holder 1 can provide a plurality of through holes 15 or 120, each anti-vibrating device 11 or 12 being arranged in the respective through hole 15 or 120 in correspondence with one face of said main body 2. These anti-vibrating devices 11 or 12 can also be provided in other types of license plate holder devices 1, therefore not necessarily in the one described in the present embodiment, being sufficient that the license plate holder device 1 has at least one main body 2, preferably having a rectangular shape as previously described, and providing at least one or more through holes for housing said anti-vibrating devices.

In particular, referring to Figures 1a - 1b and 10 and 11, a first type of anti-vibrating devices, indicated by the numerical reference 11, can be observed. Said anti-vibrating devices 11 are arranged integrated into the main body 2 of the license plate holder device 1, each arranged in correspondence with the respective through hole 15, and are adapted to reduce vibrations between the license plate, when coupled to the license plate holder device 1, and the main body 2. In fact, after the license plate has been coupled to the vehicle, during the movement of the vehicle, the license plate can move in its housing, vibrating and causing annoying noises.

To reduce such vibrations, a plurality of first anti-vibrating devices 11 can be provided, one for each through hole 15. Each first anti-vibrating device 11 includes a button 11' and two connecting joints 11", each with one end connected integrally to the edge of the respective through hole 15 of said main body 2, and with the other end connected to said button 11'.

These connecting joints 11" act as a mechanical suspension integrated into the license plate holder device 1.

In particular, this button-like portion 11' can project or protrude, along an axis parallel to said transverse z axis, relative to the front face of the main body 2 of the license plate holder device 1, to come into contact with the license plate when it is coupled thereto.

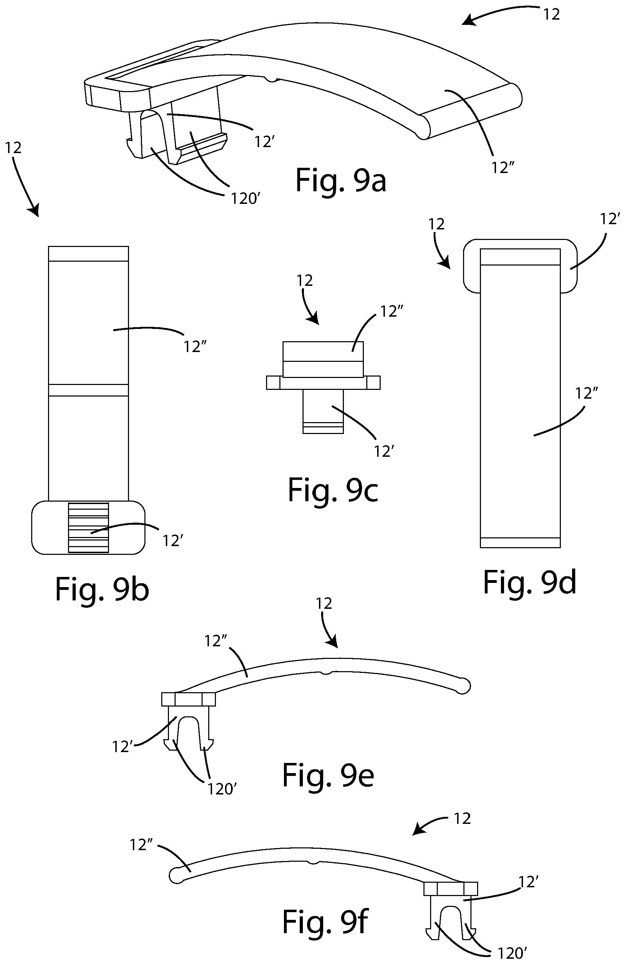

Describing now, in particular, Figures 1a - 1b and 9a - 9f, a second type of anti-vibrating or anti-vibration device 12 is shown, in a first embodiment, to reduce vibrations between the license plate holder device 1 and the bodywork of the vehicle on which it is mounted.

Also in this case, these devices can be mounted in any type of license plate holder device as long as they have a main body, preferably having a quadrangular shape to adapt to the shape of the license plate to be housed.

Each second anti-vibrating device 12 can have a rigid body 12', adapted to be coupled to the respective through hole 120 obtained in the main body 2, and an elastic arm 12" in the form of an arc of a circle rigidly joined to said rigid body 12' at one end thereof and having its concavity facing towards one face of said main body 2.

Each second anti-vibration device 12 is coupled to the rear face of the main body 2, in other words the face that is fixed to the vehicle on which it is mounted.

More anti-vibration devices 12 can be provided based on the shape and curvature of the front portion of the vehicle.

The elastic portion 12" in the form of an arc of a circle is placed with the convex portion facing towards the vehicle in such a way as to come into contact with it, flexing slightly relative to the rigid portion 12' which anchors to the main body 2 of the license plate holder device 1.

In other words, said second anti-vibration device 12 acts as an anti-vibration clip.

Preferably, the through hole 120 obtained in said main body 2 can have a quadrangular shape or perimeter. Furthermore, the rigid body 12' of the second anti-vibration device 12 can have a cubic volume conforming to said quadrangular through hole 120. This advantageously prevents the rotation of the anti-vibration device 12 relative to the hole 12 to which it is anchored.

In other words, the coupling between the second anti-vibration device 12 and the main body 2 is an anti-rotational square coupling profile.

As can be seen from Figures 9a - 9f, the rigid anchoring body 12' of each anti-vibration device 12 can provide a pair of anchoring tabs 120' to rigidly anchor said anti-vibration device 12 to two opposite sides of said quadrangular hole 120 of said main body 2, improving its anchoring stability.

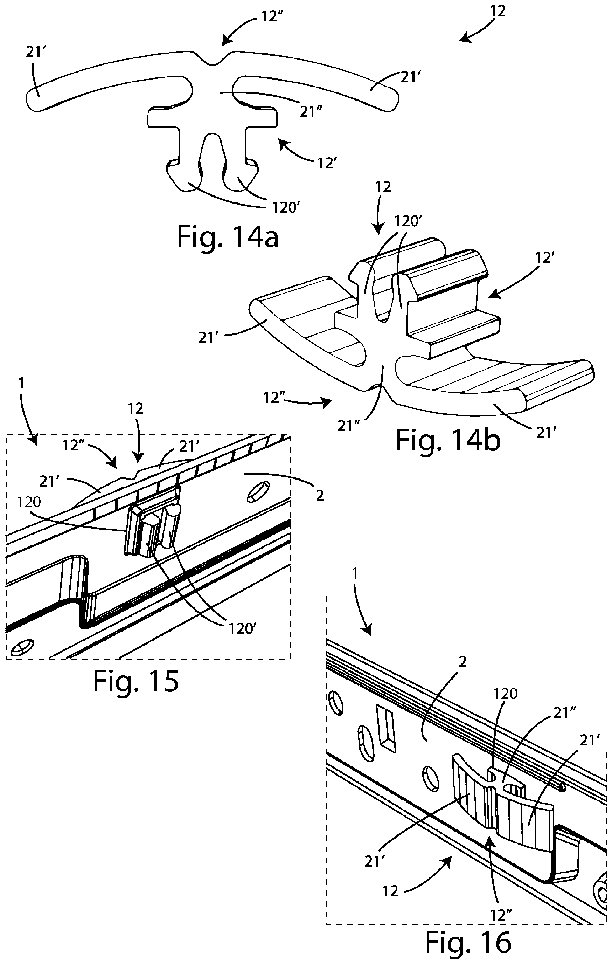

With reference to Figures 14a - 14b, 15 and 16 it is possible to visualize the second embodiment of the anti-vibration device 12, whose elements in common with the first embodiment of the anti-vibration device 12, visible in Figures 9a - 9f, will be identified by the same numerical references.

This second embodiment differs from the first embodiment due to the different configuration of the elastic portion 12" connected to said rigid portion 12'. In fact, according to the invention, said elastic portion 12" consists of two elastic sub-portions 21', consisting of two arms 21' equal to each other rigidly joined to said rigid body 12' at their common end, in particular so as to join the rigid portion 12' of the anti-vibrating device 12 with a central portion of said elastic portion 12". In particular, the elastic portion 12" can be in the form of an arc of a circle. In this second embodiment, said arms 21' are joined to said rigid portion 12' of said anti-vibration device 12 by means of a spacer 21", forming a single continuous body of the anti-vibrating device 12, advantageously spacing the rigid portion 12', by which the anti-vibrating device 12 is coupled to the license plate holder device 1, from the vehicle.

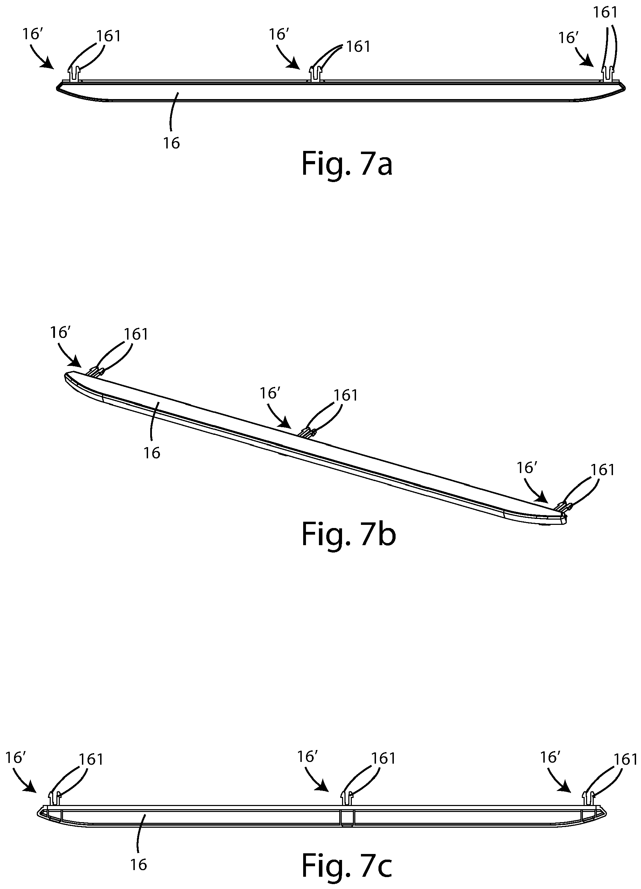

Now observing Figures 1a - 1b and 7a - 7c, a license plate holder device 1 is shown comprising a removable rod 16 for displaying information, for example advertising-related information in relation to the car manufacturer or the vehicle dealer.

The rod 16 is not necessarily linked to the other characteristics of the license plate holder device described, it is sufficient that the license plate holder device 1 has a main body for housing the license plate.

The rod 16, in fact, protrudes from one face of the main body 2, in particular from the lower face, and is irremovably coupled thereto.

More particularly, said rod 16 includes fastening means 16' for fastening to said main body 2, wherein said fastening means are at least one snap lock 16'.

Furthermore, said snap lock 16' can provide a pair of hooks 161 arranged on said rod 16 and a cavity 160 obtained in the side face of said main body 2, into which said pair of hooks 161 are adapted to be inserted.

As shown in Figures 7a - 7c, said rod 16 can comprise at least two, preferably three, snap locks 16'.

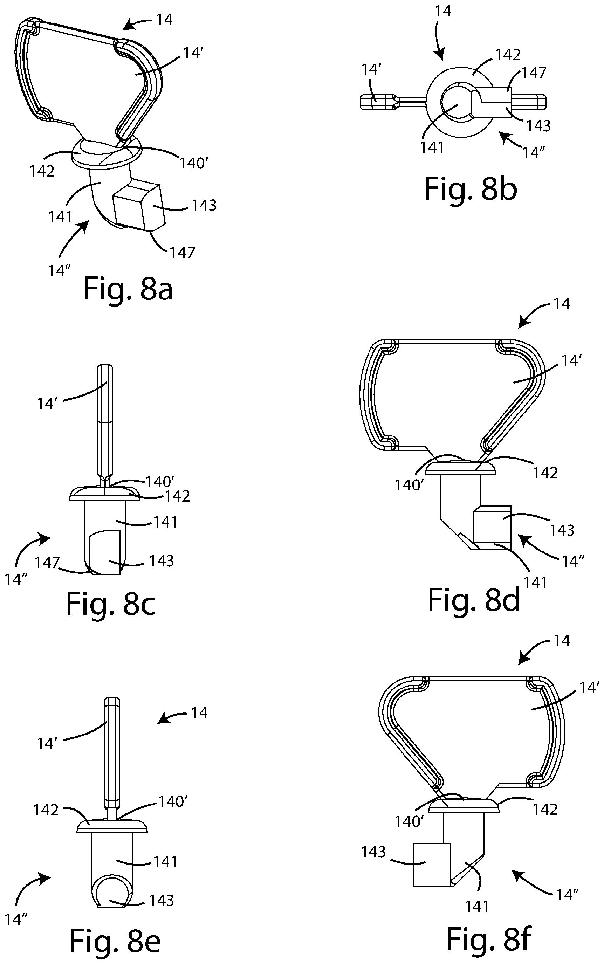

Figures 1a, 1b and 8a - 8f show a locking device 14, adapted to couple by interlocking with said main body 2, in correspondence with respective through holes 140 obtained in the main body 2, to rigidly constrain the license plate with said license plate holder device 1.

Advantageously, the license plate holder device according to the invention allows a greater flexibility and number of installation positions on the bodywork of a vehicle.

Even more advantageously, the license plate holder device according to the invention is economical and easy to install.

Furthermore, the license plate holder device according to the invention advantageously makes it possible to eliminate the presence of excessive vibrations during use of the vehicle on which it is installed.

Finally, the license plate holder device according to the invention advantageously allows the license plate to be firmly and stably installed on said vehicle.

In the foregoing, the preferred embodiments have been described and variations of the present invention have been suggested, but it is to be understood that those skilled in the art will be able to make modifications and changes without thereby departing from the relevant scope of protection, as defined by the attached claims.

## Claims

1. A license plate holder device (1) including
a main body (2) adapted to be anchored to a vehicle and to support a license plate,
said main body (2) having a first main development direction parallel to a first axis (x), said main body (2) providing at least one opening (3),
said at least one opening (3) having two mating edges (7) opposite each other and parallel to said first axis (x),
said license plate holder device (1) further including
a coupling mechanism (4) for coupling said license plate holder device to said vehicle, said coupling mechanism (4) being adapted to be housed in said at least one opening (3) and having
at least one plate (6) adapted to rest on said two mating edges (7) of said at least one opening (3),
said at least one plate (6) providing
at least one slit (9) extending longitudinally, whose longitudinal axis (y) is perpendicular to said first axis (x), defining a first plane (xy),
at least one first member (10) provided with a slot (13), and
fixing means (5) to couple said license plate holder device (1) to said vehicle by means of said first member (10),
said license plate holder device (1) being **characterized in that**
said at least one plate (6) is slidably coupled along said first axis (x) to said two mating edges (7) of said at least one opening (3)
and **in that**
said at least one first member (10) is slidably coupled along said longitudinal axis (y) to said at least one slit (9).

2. The license plate holder device (1) according to the preceding claim, wherein said at least one plate (6) has at least one tab (8', 8"), in correspondence with each of its longitudinal ends along said longitudinal axis (y), adapted to slidably couple to a respective mating edge (7) of the respective opening (3) of said main body (2).

3. The license plate holder device (1) according to the preceding claim, wherein each mating edge (7) provides a coupling rail (72) extending parallel to said first axis (x), wherein in correspondence with each longitudinal end said at least one plate (6) comprises a first tab (8') and at least one second tab (8"), said two tabs (8', 8") being spaced along a transverse axis (z) perpendicular to said first plane (xy) to form an indentation (82), and wherein each coupling rail (72) is inserted into the respective indentation (82) between the two tabs (8', 8") which slidably couple thereto.

4. The license plate holder device (1) according to the preceding claim, wherein said at least one second tab (8") is arranged offset from said first tab (8'), along an axis parallel to said first axis (x).

5. The license plate holder device (1) according to claim 3 or 4, wherein the coupling rail (72) of each mating edge (7) has a substantially "S"-shaped longitudinal section on whose concavities said first one and said at least one second tab (8'; 8") respectively abut.

6. The license plate holder device (1) according to the preceding claim, wherein said first tab (8') of each longitudinal end of said at least one plate (6) has a protrusion (81') having a substantially "L"-shaped longitudinal section with the short arm facing towards the respective indentation (82) abutting the respective concavity of said substantially "S"-shaped section of said coupling rail (72).

7. The license plate holder device (1) according to any one of claims 3-6, wherein said at least one plate (6) in correspondence with each of its longitudinal ends has two second tabs (8") and wherein said first tab (8') is arranged between said two second tabs (8").

8. The license plate holder device (1) according to any one of claims 3-7, wherein a portion (73) of each mating edge (7) does not have said coupling rail (72), therefore forming a slit (73) to allow the tabs (8', 8") of said at least one plate (6) to be positioned in said at least one opening (3).

9. The license plate holder device (1) according to any one of the preceding claims, wherein said at least one slit (9) of said at least one plate (6) has two side rails (91) placed inside said at least one slit (9) along an axis parallel to said longitudinal axis (y), and wherein said first member (10) has two anchoring arms (101), projecting along said transverse axis (z), adapted to slidably couple to the two side rails (91) of the respective slit (9) of said at least one plate (6).

10. The license plate holder device (1) according to the preceding claim, wherein each of said anchoring arms (101) of said first member (10) has a substantially "L"-shaped cross section for anchoring to the respective side rail (91) of said slit (9).

11. The license plate holder device (1) according to any one of the preceding claims, wherein said main body (2) provides a plurality of through holes (15; 120), wherein said license plate holder device (1) includes a plurality of anti-vibrating devices (11; 12), each anti-vibrating device (11; 12) being arranged in the respective through hole (15; 120) in correspondence with one face of said main body (2) to reduce vibrations between said license plate holder device (1) and said vehicle or said license plate.

12. The license plate holder device (1) according to the preceding claim, wherein each anti-vibrating device (11) includes a button (11') and two connecting joints (11"), each with one end connected to the edge of the respective through hole (15) of said main body (2), and with the other end connected to said button (11').

13. The license plate holder device (1) according to the preceding claim, wherein said button (11') protrudes from one face of said main body (2).

14. The license plate holder device (1) according to claim 11, wherein said anti-vibration device (12) has a rigid body (12'), adapted to be coupled to the respective through hole (120) of said main body (2), and at least one elastic arm (12") in the form of an arc of a circle rigidly joined to said rigid body (12') at one end thereof and having its concavity facing towards one face of said main body (2).

15. The license plate holder device (1) according to the preceding claim, wherein said through hole (120) on said main body (2) has a quadrangular shape and wherein said rigid body (12') of said anti-vibration device (12) has a cubic volume conforming to said through hole (120).

16. The license plate holder device (1) according to the preceding claim, wherein said rigid body (12') of said anti-vibration device (12) provides two anchoring tabs (120') that rigidly anchor said anti-vibration device (12) to two opposite sides of said quadrangular hole (120) of said main body (2).

17. The license plate holder device (1) according to any one of claims 14 - 16, wherein said anti-vibration device (12) includes two elastic arms (12") equal to each other rigidly joined to said rigid body (12') at their common end.

18. The license plate holder device (1) according to any one of the preceding claims, wherein it includes a rod (16) comprising fastening means (16') for fastening to said main body (2), wherein said fastening means are at least one snap lock (16').

19. The license plate holder device (1) according to the preceding claim, wherein said snap lock (16') provides a pair of hooks (161) arranged on said rod (16) and a cavity (160) obtained in the side face of said main body (2), into which said pair of hooks (161) are adapted to be inserted.

20. The license plate holder device (1) according to claim 18 or 19, wherein said rod (16) comprises at least two, preferably three, snap locks (16').
